# EUROPÄISCHE PATENTSCHRIFT

(11) **EP 3 020 162 B1**
(45) Veröffentlichungstag und Bekanntmachung des Hinweises auf die Patenterteilung: **10.10.2018**
(21) Anmeldenummer: 14761967.0
(22) Anmeldetag: 26.08.2014
(51) Int. Cl.: H04L 12/40, G06F 11/18, G06F 11/20, G06F 11/30, H04L 12/42

(54) **SEMANTISCHE DEDUPLIKATION**
SEMANTIC DEDUPLICATION
DÉDUPLICATION SÉMANTIQUE

(30) Priorität: 11.10.2013 EP 13188333
(43) Veröffentlichungstag der Anmeldung: 18.05.2016
(73) Patentinhaber: Siemens Aktiengesellschaft, 80333 München (DE)
(72) Erfinder: FELD, Joachim, 90451 Nürnberg (DE); FIEGE, Ludger, 85567 Grafing (DE); RIEDL, Johannes, 84030 Ergolding (DE); SCHMID, Thomas, 70771 Leinfelden-Echterdingen (DE); ZIRKLER, Andreas, 81735 München (DE)
(86) Internationale Anmeldenummer: PCT/EP2014/068048
(87) Internationale Veröffentlichungsnummer: WO 2015/051945

(56) Entgegenhaltungen:
- DE-A1- 10 223 880

## Beschreibung

Die Erfindung bezieht sich auf das technische Gebiet der Reduktion einer Datenlast in einem Netzwerk.

In sicherheitskritischen Umgebungen müssen Daten häufig redundant versandt werden bzw. physikalische Größen redundant gemessen und versandt werden. Die Redundanz ist jedoch nur im Fehlerfall notwendig und verdoppelt im Normalfall die verbrauchten Ressourcen, z.B. Netzwerkbandbreite.

Insbesondere bei fail-operational Systemen, beispielsweise Steer-by-wire Systemen in Kraftfahrzeugen, werden redundante Aggregate verbaut, die jeweils über ein redundantes Kommunikationssystem an eine verarbeitende Steuereinheit, z.B. einen Zentralrechner, angebunden sind. Dadurch wird z.B. ein Messwert, beispielsweise der Ist-Lenkwinkel, redundant erfasst und jeweils redundant übertragen, d.h. viermal am Zentralrechner empfangen. Falls es sich bei den Messwerten um Daten mit großer Bandbreite handelt, wie beispielsweise Bilder aus einer Stereokamera oder Radarechos, hat die Vervierfachung der Daten spürbare Auswirkungen auf die Netzwerkauslastung und Netzwerkauslegung. Eine größere Dimensionierung des Netzwerkes hat Auswirkungen auf die Stückkosten, was insbesondere im Automobilsektor kritisch ist.

Hierzu ist ein Verfahren bekannt, gemäß dem nur einer der redundanten Knoten, der so genannte Master, arbeitet und Daten sendet, während der andere, der so genannte Slave, nur die Funktion des Masters überwacht und sich im Fehlerfall (unterbliebene oder fehlerhafte Nachricht) einschaltet. Hierfür werden disjunkte Kommunikationspfade verwendet. Es ist möglich, dass mehrere Slaves für das gleiche Datum zur Verfügung stehen um die Zuverlässigkeit des Gesamtsystems weiter zu erhöhen.

Verwandte Ansätze: High-availability Seamless Redundancy (HSR) definiert in IEC 62439-3 ein Ethernet-Protokoll, um redundante Nachrichten in einem Ring zu filtern. Es nutzt hierzu Tags an einzelnen Nachrichten, um redundante Übertragungen zu erkennen ohne den Inhalt der Nachrichten selbst zu prüfen.
Verwandte Ansätze: In allgemein vermaschten Netzwerken wird Filtering genutzt, um Bandbreite zu sparen bzw. die Ausbreitung unerwünschter Inhalte (Firewall) zu verhindern. In diesem Zusammenhang gibt es verwandte Arbeiten auf dem Gebiet der Wireless Mesh Networks, die aber auf rekonfigurierbare Netze mit meist probabilistischen Ansätze abzielen (vgl. Mesh network firewalling with Bloom Filters, IEEE International Conference on Communications (ICC'07), 2007), die für die hier dargestellte sicherheitskritische Kommunikation nicht anwendbar ist.

Das Dokument DE10223890 beschreibt ein Verfahren zum Reduzieren des Datenverkehrs in einem Netzwerk, wobei die Master-Daten eines Master-Knotens an mindestens eine Prüfinstanz geschickt wurden und geprüft werden.

Der vorliegenden Erfindung liegt die Aufgabe zugrunde, den Datenverkehr in einem Netzwerk zu reduzieren.
Diese Aufgabe wird durch die in den unabhängigen Ansprüchen beschriebenen Lösungen gelöst. Vorteilhafte Ausführungsformen sind durch die weiteren Ansprüche beschrieben.
Gemäss einem ersten Aspekt wird ein Verfahren zum Reduzieren des Datenverkehrs in einem Netzwerk vorgestellt. Dazu werden Master-Daten eines Master-Knotens an mindestens eine Prüfinstanz gesendet. Die Master-Daten werden durch die Prüfinstanz geprüft. Im fehlerfreien Fall werden entweder die Master-Daten oder von durch den Slave-Knoten ermittelte Slave-Daten von der Prüfinstanz an die datenverarbeitende Einheit gesendet. Bei einem erkannten Fehler werden alle durch die Prüfinstanz verfügbaren Master-Daten und Slave-Daten von der Prüfinstanz an die datenverarbeitende Einheit gesendet.

Gemäss einem weiteren Aspekt wird ein System vorgestellt, welches Mittel umfasst, welche adaptiert sind, ein solches Verfahren durchzuführen.

Gemäss einem weiteren Aspekt wird ein System zum Reduzieren des Datenverkehrs in einem Netzwerk vorgestellt. Das System umfasst einen Master-Knoten, einen Slave-Knoten und eine datenverarbeitende Einheit. Der Master-Knoten und/oder der Slave-Knoten und/oder die datenverarbeitende Einheit sind an eine Ringtopologie angeschlossen. Der Master-Knoten ist adaptiert, von ihm ermittelte Master-Daten in jeweils unterschiedlichen Ringrichtungen an die datenverarbeitende Einheit und an den Slave-Knoten zu senden. Der Slave-Knoten ist adaptiert, von ihm ermittelte Slave-Daten in jeweils unterschiedlichen Ringrichtungen an die datenverarbeitende Einheit und an den Master-Knoten zu senden. Der Slave-Knoten ist adaptiert, die Master-Daten zu prüfen, in einem regulären Betrieb entweder nur die Master-Daten oder nur die Slave-Daten an die datenverarbeitende Einheit zu senden. Der Slave-Knoten ist adaptiert, bei einem erkannten Fehler sowohl die Master-Daten als auch die Slave-Daten an die datenverarbeitende Einheit zu senden.

Gemäss einem weiteren Aspekt wird ein Verfahren zum Reduzieren des Datenverkehrs in einem Netzwerk vorgestellt. Das Netzwerk umfasst einen Master-Knoten, einen Slave-Knoten und eine datenverarbeitende Einheit. Der Master-Knoten und/oder der Slave-Knoten und/oder die datenverarbeitende Einheit sind an eine Ringtopologie angeschlossen. Der Master-Knoten sendet von ihm ermittelte Master-Daten in jeweils unterschiedlichen Ringrichtungen an die datenverarbeitende Einheit und an den Slave-Knoten. Der Slave-Knoten sendet von ihm ermittelte Slave-Daten in jeweils unterschiedlichen Ringrichtungen an die datenverarbeitende Einheit und an den Master-Knoten. Die Master-Daten werden durch den Slave-Knoten geprüft. Falls die Prüfung der Master-Daten auf einen regulären Betrieb hinweist, sendet der Slave-Knoten nur die Master-Daten oder nur die Slave-Daten an die datenverarbeitende Einheit. Falls die Prüfung der Master-Daten auf einen Fehler hinweist, also bei einem erkannten Fehler, sendet der Slave-Knoten sowohl die Master-Daten als auch die Slave-Daten an die datenverarbeitende Einheit.

Die Erfindung wird nachfolgend anhand der Figuren beispielsweise näher erläutert. Dabei zeigen:
Figur 1 ein Blockdiagramm eines Ringnetzwerks;
Figur 2 ein Blockdiagramm eines Ringnetzwerks gemäss einer Ausführungsform;
Figur 3 das Ringnetzwerk von Figur 2 bei einer unterbrochenen Kommunikationsverbindung;
Figur 4 ein Blockdiagramm eines Systems gemäss einer weiteren Ausführungsform;
Figur 5 ein Flussdiagramm gemäss einer weiteren Ausführungsform der Erfindung.

Gemäß einer Ausführungsform der vorliegenden Erfindung wird die Netzwerktopologie so gewählt, dass die Daten des auch Master genannten Master-Knotens auf dem Weg zum Zentralrechner den auch Slave genannten Slave-Knoten passieren, gleichzeitig die Daten des Slaves auf dem Weg zum Zentralrechner den Master passieren. Vorzugsweise wird dafür eine Ringtopologie vorgeschlagen.

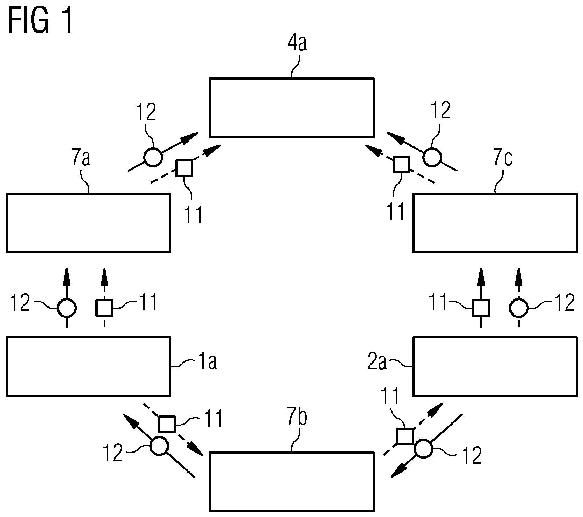

Eine solche Topologie ist beispielsweise in Figur 1 dargestellt. Die Ringtopologie umfasst einen Master-Knoten 1a, einen Slave-Knoten 2a und eine als Zentralrechner ausgestaltete datenverarbeitende Einheit 4a, welche zusammen mit weiteren Knoten 7a-c in der Ringtopologie angeordnet sein können.

In einem Netzwerk mit den oben beschriebenen Eigenschaften versendet der Master-Knoten 1a Daten 11. Der Slave-Knoten 2a führt die gleichen Operation wie der Master 1a aus und erzeugt und versendet redundante Daten 12, was auch als hot-standby bezeichnet wird. Beide verschicken ihre Daten redundant, beispielsweise über beide Richtungen im Ring, an den Zentralrechner, vgl. durchgezogene und gestrichelte Pfeile in Figur 1.

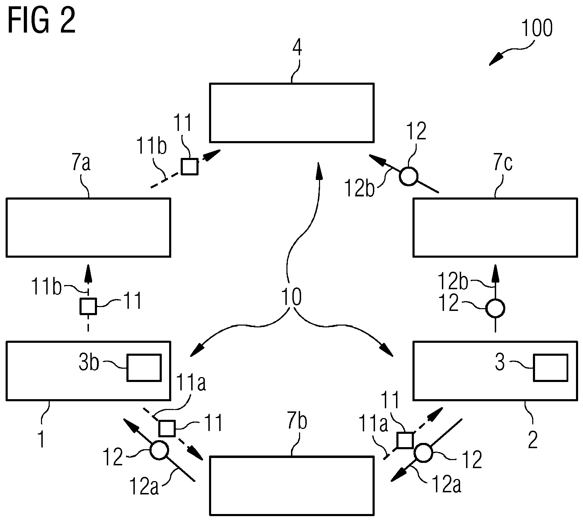

Figur 2 zeigt ein Netzwerk 100. Das Netzwerk 100 umfasst ein System 10 gemäss einer Ausführungsform der Erfindung. Das System 10 umfasst einen Master-Knoten 1, einen Slave-Knoten 2 und eine datenverarbeitende Einheit 4, welche in einer Ringtopologie angeordnet sind. Gemäss einer Verallgemeinerung dieser Ausführungsform müssen der Master-Knoten 1, der Slave-Knoten 2 und/oder die datenverarbeitende Einheit 4, jedoch nicht zwingend in einer Ringtopologie angeordnet sein, sondern es reicht, wenn einer, mehrere, oder alle von ihnen an die Ringtopologie angeschlossen sind. Beispielsweise kann der Master-Knoten 1, der Slave-Knoten 2 und/oder die datenverarbeitende Einheit 4 abgesetzt von der Ringtopologie über eine Leitung oder gar ein weiteres Netzwerk mit der Ringtopologie verbunden sein (nicht dargestellt), sodass der Master-Knoten 1, der Slave-Knoten 2 und/oder die datenverarbeitende Einheit 4 immer noch über die Ringtopologie miteinander kommunizieren. Mit andern Worten: Der Master-Knoten 1, der Slave-Knoten 2 und/oder die datenverarbeitende Einheit 4 sind dann in einer Topologie die einen oder mehrere Ringe enthält. Ein in der Ringtopologie angeordneter Knoten 1, 2, 4 gilt selbstverständlich auch als an die Ringtopologie angeschlossen. Die Ringtopologie kann einen oder mehrere Ringe umfassen. Das Netzwerk 100 kann zudem weitere Knoten 7a-7c umfassen. Der Master-Knoten 1 ist adaptiert ist, von ihm ermittelte Master-Daten 11 in jeweils unterschiedlichen Ringrichtungen, dargestellt durch die Datenströme 11a, 11b, an die datenverarbeitende Einheit 4 und an den Slave-Knoten 2 zu senden. Der Slave-Knoten 2 ist adaptiert, von ihm ermittelte Slave-Daten 12 in jeweils unterschiedlichen Ringrichtungen, dargestellt durch die Datenströme 12a, 12b, an die datenverarbeitende Einheit 4 und an den Master-Knoten 1 zu senden. Der ist Slave-Knoten 2 adaptiert, die Master-Daten 11 zu prüfen. Dazu umfasst er beispielsweise eine Prüfinstanz 3. Ergibt die Prüfung der Master-Daten 11 durch den Slave-Knoten 2, dass das System 10 und/oder der Master-Knoten 1 sich in einem regulären Betrieb befindet, so sendet der Slave-Knoten 2 nur die Master-Daten 11 oder nur die Slave-Daten 12 an die datenverarbeitende Einheit 4. Vorzugsweise terminiert der Slave-Knoten 2 im regulären Betrieb die durch vom Slave-Knoten empfangenen Master-Daten 11 und sendet nur durch den Slave-Knoten 2 generierte Slave-Daten 12 mittels des Datenstroms 12b an die datenverarbeitende Einheit 4. Dadurch müssen die vom Slave-Knoten 2 zu der datenverarbeitenden Einheit 4 versendeten Daten nicht zuerst noch die Strecke von dem Master-Knoten 1 zu dem Slave-Knoten 2 zurücklegen. Erkennt die Prüfung der Master-Daten 11 durch den Slave-Knoten 2, dass das die Master-Daten 11 und/oder das System 10 und/oder der Master-Knoten 1 jedoch einen Fehler aufweisen, so sendet der Slave-Knoten 2 sowohl die Master-Daten 11 als auch die Slave-Daten 12 an die datenverarbeitende Einheit 4.

Mit andern Worten: Gemäss dieser Ausführungsform der Erfindung überwacht der Slave-Knoten 2 somit die Funktionalität des Masters 1 indem der Datenstrom 11a des Masters 1 inspiziert wird. Dazu prüft der Slave-Knoten 2 die syntaktische und semantische Korrektheit der Daten 11. Diese Prüfungen können beispielsweise enthalten:
- Prüfung der Datenpakete auf Korrektheit, z.B. CRC-Prüfung;
- Falls der Sender der Daten selbst redundant aufgebaut ist, z.B. zwei physikalische Sensoren enthält, Vergleich der beiden im Paket enthaltenden Daten auf Gleichheit (Delta-Konsistenz);
- Vergleich der empfangenen Daten mit den vom Slave selbst gemessenen Daten (Delta-Konsistenz);
- Vergleich der Daten mit den zuletzt empfangenen Daten und Plausibilisierung der Änderung (Gradient);
- Vergleich der Daten mit einem bekannten, zulässigen Wertebereich (Plausibilisierung);
- Zeitliche Abweichung von dem Zeitpunkt, an dem ein Paket vom Master entsprechend eines gegebenen Schedules erwartet wird.

Nur bei erkannten Fehlern leitet der Slave-Knoten 2 die vom Master-Knoten 1 empfangenen Daten 12 zusätzlich zu den selbst erzeugten Daten 11 im Netzwerk weiter zum Zentralrechner 4.

Gemäss einer bevorzugten Ausführungsform führt der Master-Knoten 1 seinerseits die gleichen Überprüfungen und das gleiche Verfahren mit den Slave-Daten 12, die er vom Slave 2 über den Datenstrom 12a empfangen hat, aus, und leitet ebenfalls nur im Falle eines erkannten Fehlers die Daten 12 vom Slave 2 an die datenverarbeitende Einheit 4 weiter. Figur 2 zeigt somit das System 10 und die Datenströme im fehlerfreien Fall.

Gemäss einer bevorzugten Ausführungsform ist der Master-Knoten 1 daher adaptiert, die Slave-Daten 12 zu prüfen. In einem regulären Betrieb sendet der Master-Knoten 1 nur die Slave-Daten 12 oder die Master-Daten 11 an die datenverarbeitende Einheit 4. Damit die von der datenverarbeitenden Einheit 4 empfangenen Daten möglichst kurze Kommunikationspfade zurücklegen, sendet der Master-Knoten 1 vorzugsweise im regulären Betrieb nur die Master-Daten 11 mittels des Datenstroms 11b an die datenverarbeitende Einheit 4. Bei einem erkannten Fehler sendet der Master-Knoten jedoch sowohl die Master-Daten 11 als auch die Slave-Daten 12 an die datenverarbeitende Einheit 4, ähnlich wie in Figur 1 dargestellt.

Anhand von Figur 2 sieht man, dass gemäss bevorzugten Ausführungsformen an jedem Link im Ring nur noch ein Datenstrom (pro Richtung) übertragen werden muss, die erforderliche Netzwerk-Bandbreite wurde, ein Full-Duplex Netzwerk vorausgesetzt, halbiert. Dadurch kann die verbleibende Bandbreite für sonstige Daten verwendet werden, oder das Netzwerk geringer dimensioniert werden.

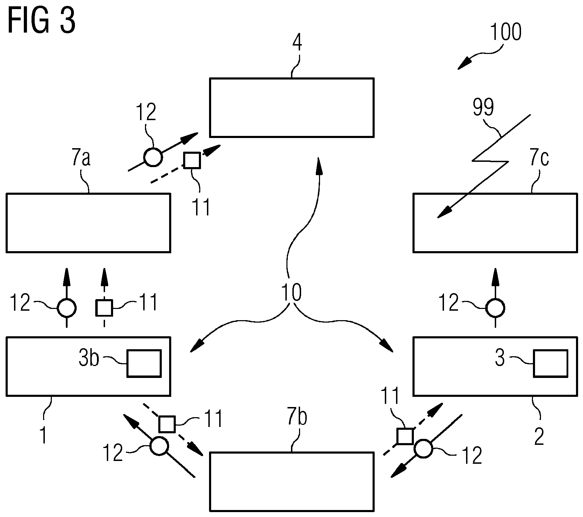

Dennoch erhält der Zentralrechner 4 alle Informationen. Gleichzeitig kann ein beliebiger Einzelfehler nicht dazu führen, dass der Zentralrechner 4 keine Daten mehr bekommt:
- Fällt der Master 1 oder der Slave 2 aus, sind die Daten des jeweils anderen noch verfügbar. Der Zentralrechner 1 erkennt die Degradation des Systems 10 und muss ggf. Gegenmaßnahmen, z.B. einen Missionsabbruch, ergreifen. Gemäss einer Ausführungsform ist die datenverarbeitende Einheit 4 daher adaptiert, bei einem Ausfall des Master-Knotens 1 oder des Slave-Knotens 2 eine Gegenmassnahme zu ergreifen.
- Fällt die Kommunikationsverbindung zwischen Master 1 und Slave 2 aus, erkennen das der Master 1 bzw. der Slave 2. Einer oder beide leiten dann verfälsche Daten des anderen weiter, oder liefern eine Statusinformation, dass erwartete Pakete nicht eingetroffen sind. Der Zentralrechner 4 kann die Degradation erkennen und geeignet reagieren. Gemäss einer Ausführungsform ist der Master-Knoten 1 und/oder der Slave-Knoten 2 daher adaptiert, einen Ausfall einer Kommunikationsverbindung zwischen dem Master-Knoten 1 und dem Slave-Knoten 2 zu erkennen, und im Fall eines erkannten Ausfalls eine Degradationsinformation an die datenverarbeitende Einheit 4 zu senden.
- Fällt eine Kommunikationsverbindung zwischen Master 1 bzw. Slave 2 und Zentralrechner 4 aus, erhält der Zentralrechner 4 nur noch die Daten des jeweils anderen. Figur 3 zeigt eine Ausführungsform, bei welcher die Kommunikationsverbindung durch einen Unterbruch 99 zwischen dem Slave-Knoten 2 und dem Zentralrechner 4 unterbrochen ist. Der Zentralrechner 4 erkennt die Degradation des Systems 10 und muss ggf. Gegenmaßnahmen, z.B. einen Missionsabbruch, ergreifen. In weiteren Ausführungsformen kann die Verfügbarkeit des Gesamtsystems gesteigert werden, indem der Zentralrechner 4 Statusinformationen über die empfangenen Daten an die Aggregate sendet. So kann z.B. bei einem Ausfall der rechten Kommunikationsverbindung der Master 1 aufgefordert werden, die Daten vom Slave 2 weiterzuleiten, obwohl er sie nicht als fehlerhaft erkennt, vgl. Figur 3. Damit ist trotz eines defekten Kommunikationspfades die Sensorredundanz wiederhergestellt. Gemäss einer Ausführungsform ist die datenverarbeitende Einheit 4 daher adaptiert bei einem Ausfall einer Kommunikationsverbindung zwischen dem Slave-Knoten 2 und der datenverarbeitenden Einheit 4 eine als Degradationsinformation ausgestaltete Statusinformation an den Master-Knoten 1 zu senden, und der Master-Knoten 1 adaptiert ist bei einer erkannten Degradation vom Slave-Knoten 2 empfangene Slave-Daten 12 an die datenverarbeitende Einheit 4 weiter zu leiten. Gemäss einer Ausführungsform ist datenverarbeitende Einheit 4 adaptiert, bei einem Ausfall einer Kommunikationsverbindung zwischen dem Master-Knoten 1 und der datenverarbeitenden Einheit 4 eine als Degradationsinformation ausgestaltete Statusinformation an den Slave-Knoten 2 zu senden, und der Slave-Knoten 2 adaptiert ist bei einer erkannten Degradation vom Master-Knoten 1 empfangene Slave-Daten 12 an die datenverarbeitende Einheit 4 weiter zu leiten.

Gemäss weiteren Ausführungsformen werden Pakete des Masters 1 im Datenstrom des Netzwerkes identifiziert und vom Slave 2 untersucht. Dies kann anhand der Absenderadresse, oder bei funktionsspezifischer Adressierung auch mittels der Zieladresse geschehen. In einem Ethernet-basierten Netzwerk wird die Identifikation der relevanten Datenpakete vorzugsweise von einem im Knoten enthaltenen Switch, d.h. in Hardware, durchgeführt, um die CPU von zu großen Verarbeitungsaufwand zu schützen.

Im Unterschied zum besagten Ethernet-Protokoll der High-availability Seamless Redundancy (HSR) erweitert die vorliegende Erfindung die Prüfung auf die Nachrichten-Inhalte, um semantisch bzw. inhaltlich gleiche oder innerhalb eines definierten Toleranzbereiches gleiche Nachrichten filtern zu können, die von verschiedenen Knoten stammen (hier z.B. Master und Slave). Eine solche Filterung ist mit dem o.g. HSR-Standard nicht möglich.

Eine weitere Ausführungsform kann im Gegensatz zu Hot Standby als Warm Standby bezeichnet werden. Im Warm Standby führt der Slave-Knoten 2 zunächst nur eine Prüfung der Master-Nachrichten des Datenstroms 11a aus, wie weiter oben genannt, und führt lokal keine Berechnung oder Sensorauswertung durch, ermittelt also keine zu den Master-Daten 11 redundante Slave-Daten 12. Erst wenn ein Fehler erkannt wurde (weil z.B. eine Master-Nachricht ausbleibt oder deren Plausibilisierung fehlschlägt), wird im Slave 12 die Sensorauswertung gestartet und die redundanten Nachrichten zum Zentralrechner 4 gesendet. In dieser Ausführung kann die verringerte Redundanz genutzt werden, um z.B. durch die verringerte Last auf dem Slave Datenstrom 12b zu sparen oder andere weniger kritische Anwendungen ausführen zu können.

Gemäss einer weiteren Ausführungsform wird anstelle des Zentralrechners 4 eine datenverarbeitende Einheit eingesetzt. Der Zentralrechner 4 muss also keine zentrale Funktion im Gesamtsystem haben. Es kann sich hierbei um eine datenverarbeitende Einheit handeln, die auf redundante, d.h. hoch-verfügbare Eingangsdaten angewiesen ist.

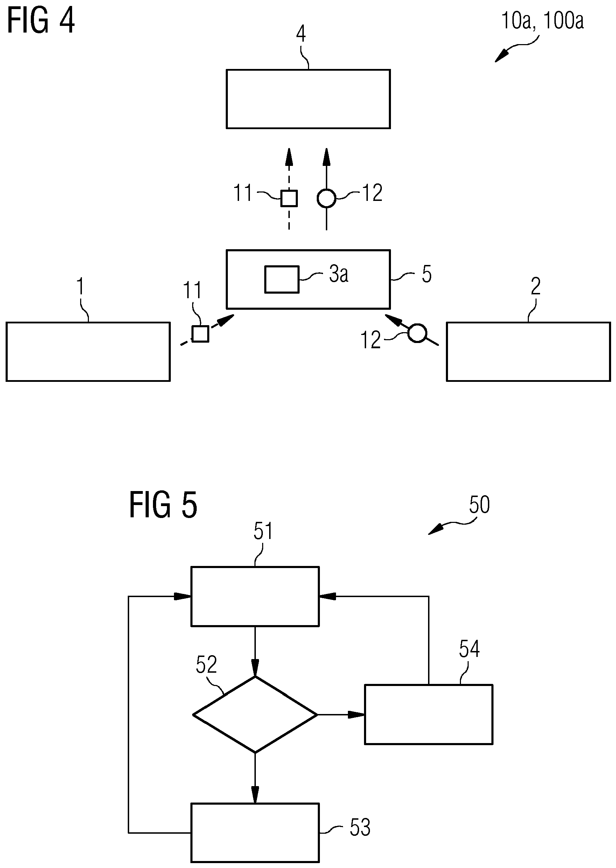

Figur 4 zeigt ein System 10a gemäss einer weiteren Ausführungsform der Erfindung. Das System basiert auf Voting in einem Netzwerk-Koppler: Der Zentralrechner 4 und der Master 1 bzw. Slave 2 liegen in unterschiedlichen Netzwerk-Segmenten. Die Prüfung, ob die Master-Nachrichten korrekt vorhanden sind, obliegt hier dem Netzwerk-Koppler 5 und nicht dem Slave 2. Dazu umfasst der Netzwerk-Koppler 5 eine Prüfinstanz 3a. Der Netzwerk-Koppler 5 entscheidet anhand der oben genannten Mechanismen, ob die Slave-Nachricht weitergeleitet werden muss. Abbildung 4 illustriert dies für den fehlerfreien Fall.

Netzwerk-Kopplung in Linien- oder Sterntopologien: Als Spezialfall des in Abbildung 4 illustrierten Netzwerkes können zwei geswitchte Ethernet-Segmente gesehen werden, in der der Netzwerk-Koppler durch einen Ethernet-Switch implementiert ist, der die o.g. Prüfungen durchführen kann.

Figur 5 zeigt ein Flussdiagramm, welches ein Verfahren 50 zum Reduzieren des Datenverkehrs in einem Netzwerk gemäss einer Ausführungsform der Erfindung darstellt. Das Verfahren umfasst die Verfahrensschritte 51-54. Im Verfahrensschritt 51 werden von einem Master-Knoten ermittelte Master-Daten 11 an mindestens eine Prüfinstanz 3 gesendet. Im Verfahrensschritt 52 werden die Master-Daten 11 durch die Prüfinstanz 3 syntaktisch und/oder semantisch geprüft. Ergibt die Prüfung der Master-Daten 11, dass keine Fehler vorliegt, also im fehlerfreien Fall, werden im Verfahrensschritt 53 entweder der Master-Daten 11 oder von durch den Slave-Knoten 2 ermittelten Slave-Daten 12 von der Prüfinstanz 3 an die datenverarbeitende Einheit 4 gesendet. Im fehlerfreien Fall werden somit nicht sowohl Master-Daten 11 als auch Slave-Daten 12 von dem Slave-Knoten 2 zu der datenverarbeitenden Einheit 4 gesendet. Ergibt die Prüfung der Master-Daten 11 jedoch, dass ein Fehler der Master-Daten 11 vorliegt, also bei einem erkannten Fehler, werden im Verfahrensschritt 54 alle durch die Prüfinstanz 3 verfügbaren Master-Daten 11 und Slave-Daten 12 von der Prüfinstanz 3 an die datenverarbeitende Einheit 4 gesendet. Das Verfahren kann wie im Flussidagramm von Figur 5 gezeigt einen Zyklus darstellen, indem nach dem Verfahrensschritt 53 und 54 ein neuer Zyklus, beginnend mit Verfahrensschritt 51, durchgeführt wird.

Gemäss einer Ausführungsform sind der Master-Knoten 1, die Prüfinstanz 3 und die datenverarbeitende Einheit 4 wie in den Figuren 1-4 dargestellt in einer Ringtopologie angeordnet.

Gemäss einer Ausführungsform führt der Slave-Knoten 2 zur Prüfung der Master-Daten 11 dieselben Operationen aus wie der Master-Knoten 1 und erzeugt so zu den Master-Daten 11 redundante Slave-Daten 12, z.B. eine Messung mittels eines Sensors. Dies wird auch als Hot Standby bezeichnet.

Gemäss einer Ausführungsform führt der Slave-Knoten 2 nur dann dieselben Operationen wie der Master-Knoten 1 aus, wenn durch die Prüfinstanz 3 ein Fehler erkannt wurde. Dies wird auch als Warm Standby bezeichnet. Dadurch wird die Last im Netzwerk zusätzlich reduziert und durch das Abschalten des Sensors kann Energie gespart oder die verfügbare Rechenleistung für andere Tasks genutzt werden.

Gemäss einer Ausführungsform umfasst oder ist ein von dem Slave-Knoten 2 separater Netzwerkkoppler 5 die Prüfinstanz 3.

Gemäss einer Ausführungsform umfasst oder ist der Slave-Knoten 2 die Prüfinstanz 3.

Gemäss einer Ausführungsform umfasst oder ist der Master-Knoten 1 eine weitere Prüfinstanz 3. Dies ermöglicht es, dass der Masterknoten 1 die Slave-Daten 12 auf dieselbe Weise überwacht, wie der Slave-Knoten die Master-Daten 11 überwacht.

Bevorzugte Ausführungsformen der Erfindung haben zum Vorteil, dass der eigentlich als hot-standby laufende Slave 2 das Netzwerk im Normalfall nicht belastet, sondern in einem von ihm erkannten Fehlerfall nur einen Datensatz, also nur seine von ihm generierten Slave-Daten oder nur die vom Master-Knoten 1 generierten Master-Daten 11 sendet. Die Redundanz (Master/Slave), die für die Verfügbarkeit von Mess- oder Kommandodaten notwendig ist, wird hier zusätzlich für die Überwachung und Deduplikation genutzt.

Durch die teilweise Verlagerung der Fehlererkennung in die Aggregate wird die Belastung des Netzwerkes und der Empfänger reduziert, ohne dabei die Redundanz zu verschlechtern. Dadurch können auch bandbreitenintensive Daten, wie z.B. Kamerabilder oder Radarechos, hochverfügbar gemacht werden, ohne die Stückkosten für die Netzwerkinfrastruktur zu erhöhen.

## Patentansprüche

1. Verfahren zum Reduzieren des Datenverkehrs in einem Netzwerk (100, 100a), umfassend die Verfahrensschritte:
- Senden von Master-Daten (11) eines Master-Knotens (1) an mindestens eine Prüfinstanz (3, 3a);
- Prüfen der Master-Daten (11) durch die Prüfinstanz (3, 3a);
- im fehlerfreien Fall Senden entweder der Masterdaten (11) oder von durch den Slave-Knoten (2) ermittelten Slave-Daten (12) von der Prüfinstanz (3, 3a) an die datenverarbeitende Einheit (4);
- bei einem erkannten Fehler Senden von allen an der Prüfinstanz (3) verfügbaren Master-Daten (11) und Slave-Daten (12) von der Prüfinstanz (3, 3a) an die datenverarbeitende Einheit (4), wobei der Slave-Knoten (2) die Prüfinstanz (3) umfasst oder ist und wobei der Master-Knoten (1), die Prüfinstanz (3, 3a) und die datenverarbeitende Einheit (4) an eine Ringtopologie angeschlossen sind, und vorzugsweise in der Ringtopologie angeordnet sind.

2. Verfahren nach einem der vorhergehenden Ansprüche, wobei der Slave-Knoten (2) zur Prüfung der Master-Daten (11) dieselben Operationen ausführt wie der Master-Knoten (1) und so zu den Master-Daten (11) redundante Slave-Daten (12) erzeugt.

3. Verfahren nach einem der vorhergehenden Ansprüche, wobei der Slave-Knoten (2) nur dann dieselben Operationen wie der Master-Knoten (1) ausführt, wenn durch die Prüfinstanz (3, 3a) ein Fehler erkannt wurde.

4. Verfahren nach einem der vorhergehenden Ansprüche, wobei ein von dem Slave-Knoten (2) separater Netzwerkkoppler (5) die Prüfinstanz (3a) umfasst oder ist.

5. Verfahren nach einem der vorhergehenden Ansprüche, wobei der Master-Knoten (1) eine weitere Prüfinstanz (3b) umfasst.

6. System (10), umfassend einen Master-Knoten (1), einen Slave-Knoten (2) und eine datenverarbeitende Einheit (4), welche an eine Ringtopologie angeschlossen sind; wobei
der Master-Knoten (1) adaptiert ist, von ihm ermittelte Master-Daten (11) in jeweils unterschiedlichen Ringrichtungen an die datenverarbeitende Einheit (4) und an den Slave-Knoten (2) zu senden;
der Slave-Knoten (2) adaptiert ist, von ihm ermittelte Slave-Daten (12) in jeweils unterschiedlichen Ringrichtungen an die datenverarbeitende Einheit (4) und an den Master-Knoten (1) zu senden;
der Slave-Knoten (2) adaptiert ist, die Master-Daten (11) zu prüfen, in einem regulären Betrieb nur die Master-Daten (11) oder die Slave-Daten (12) an die datenverarbeitende Einheit (4) zu senden, bei einem erkannten Fehler jedoch sowohl die Master-Daten (11) als auch die Slave-Daten (12) an die datenverarbeitende Einheit (4) zu senden.

7. System (10) nach Anspruch 6, wobei der Master-Knoten (1) adaptiert ist, die Slave-Daten (12) zu prüfen, in einem regulären Betrieb nur die Slave-Daten (12) oder die Master-Daten (11) an die datenverarbeitende Einheit (4) zu senden, bei einem erkannten Fehler jedoch sowohl die Master-Daten (11) als auch die Slave-Daten (12) an die datenverarbeitende Einheit (4) zu senden.

8. System (10) nach Anspruch 6 oder 7, wobei die datenverarbeitende Einheit (4) adaptiert ist, bei einem Ausfall des Master-Knotens (1) oder des Slave-Knotens (2) eine Gegenmaßnahme zu ergreifen.

9. System (10) nach einem der Ansprüche 6 bis 8, wobei der Master-Knoten (1) und/oder der Slave-Knoten (2) adaptiert ist, einen Ausfall einer Kommunikationsverbindung zwischen dem Master-Knoten (1) und dem Slave-Knoten (2) zu erkennen, und im Fall eines erkannten Ausfalls eine Degradationsinformation an die datenverarbeitende Einheit (4) zu senden.

10. System (10) nach einem der Ansprüche 6 bis 9, wobei die datenverarbeitende Einheit (4) adaptiert ist, bei einem Ausfall einer Kommunikationsverbindung zwischen dem Slave-Knoten (2) und der datenverarbeitenden Einheit (4) eine als Degradationsinformation ausgestaltete Statusinformation an den Master-Knoten (1) zu senden, und der Master-Knoten (1) adaptiert ist bei einer erkannten Degradation vom Slave-Knoten (2) empfangene Slave-Daten (12) an die datenverarbeitende Einheit (4) weiter zu leiten.

11. System (10) nach einem der Ansprüche 6 bis 10, wobei die datenverarbeitende Einheit (4) adaptiert ist, bei einem Ausfall einer Kommunikationsverbindung zwischen dem Master-Knoten (1) und der datenverarbeitenden Einheit (4) eine als Degradationsinformation ausgestaltete Statusinformation an den Slave-Knoten (2) zu senden, und der Slave-Knoten (2) adaptiert ist bei einer erkannten Degradation vom Master-Knoten (1) empfangene Slave-Daten (12) an die datenverarbeitende Einheit (4) weiter zu leiten.

12. System (10, 10a), umfassend Mittel (1, 2, 3, 3a, 3b, 4, 5), welche adaptiert sind, ein Verfahren nach einem der Ansprüche 1-5 durchzuführen.

13. Verfahren zum Reduzieren des Datenverkehrs in einem Netzwerk (100), welches einen Master-Knoten (1), einen Slave-Knoten (2) und eine datenverarbeitende Einheit (4) umfasst; wobei der Master-Knoten (1), der Slave-Knoten (2) und die datenverarbeitende Einheit (4) an eine Ringtopologie angeschlossen sind, das Verfahren umfassend die Verfahrensschritte:
- Senden von durch den Master-Knoten (1) ermittelte Master-Daten (11) in jeweils unterschiedlichen Ringrichtungen an die datenverarbeitende Einheit (4) und an den Slave-Knoten (2);
- Senden von durch den Slave-Knoten (2) ermittelte Slave-Daten (12) in jeweils unterschiedlichen Ringrichtungen an die datenverarbeitende Einheit (4) und an den Master-Knoten (1);
- Prüfen der Master-Daten (11) durch den Slave-Knoten (2), wobei falls die Prüfung der Master-Daten (11) auf einen regulären Betrieb hinweist, der Slave-Knoten nur die Master-Daten (1) oder nur die Slave-Daten (12) an die datenverarbeitende Einheit (4) sendet, und wobei bei einem erkannten Fehler der Slave-Knoten (2) sowohl die Master-Daten (11) als auch die Slave-Daten (12) an die datenverarbeitende Einheit (4) sendet.

14. Verfahren nach Anspruch 13, wobei der Master-Knoten (1) die Slave-Daten (12) prüft, und in einem regulären Betrieb nur die Slave-Daten (12) oder nur die Master-Daten (11) an die datenverarbeitende Einheit (4) sendet, bei einem erkannten Fehler jedoch sowohl die Master-Daten (12) als auch die Slave-Daten (11) an die datenverarbeitende Einheit (4) sendet.

## Claims

1. Method for reducing the data traffic in a network (100, 100a), comprising the method steps of:
- sending of master data (11) from a master node (1) to at least one checking entity (3, 3a);
- checking of the master data (11) by the checking entity (3, 3a);
- in the event of there being no error, sending of either the master data (11) or slave data (12) ascertained by the slave node (2) from the checking entity (3, 3a) to the data processing unit (4);
- in the event of an error being recognized, sending of all master data (11) and slave data (12) available on the checking entity (3) from the checking entity (3, 3a) to the data processing unit (4), wherein the slave node (2) comprises or is the checking entity (3) and wherein the master node (1), the checking entity (3, 3a) and the data processing unit (4) are connected to a ring topology, and are preferably arranged in the ring topology.

2. Method according to Claim 1, wherein the slave node (2) checks the master data (11) by carrying out the same operations as the master node (1) and thus produces slave data (12) that are redundant in relation to the master data (11).

3. Method according to one of the preceding claims, wherein the slave node (2) carries out the same operations as the master node (1) only if the checking entity (3, 3a) has recognized an error.

4. Method according to one of the preceding claims, wherein a network coupler (5) that is separate from the slave node (2) comprises or is the checking entity (3a).

5. Method according to one of the preceding claims, wherein the master node (1) comprises a further checking entity (3b) .

6. System (10) comprising a master node (1), a slave node (2) and a data processing unit (4), which are connected to a ring topology; wherein the master node (1) is adapted to send master data (11) that it ascertains to the data processing unit (4) and to the slave node (2) in respectively different ring directions;
the slave node (2) is adapted to send slave data (12) that it ascertains to the data processing unit (4) and to the master node (1) in respectively different ring directions; the slave node (2) is adapted to check the master data (11), to send only the master data (11) or the slave data (12) to the data processing unit (4) during normal operation, but to send both the master data (11) and the slave data (12) to the data processing unit (4) in the event of an error being recognized.

7. System (10) according to Claim 6, wherein the master node (1) is adapted to check the slave data (12), to send only the slave data (12) or the master data (11) to the data processing unit (4) during normal operation, but to send both the master data (11) and the slave data (12) to the data processing unit (4) in the event of an error being recognized.

8. System (10) according to Claim 6 or 7, wherein the data processing unit (4) is adapted to take a countermeasure in the event of the master node (1) or the slave node (2) failing.

9. System (10) according to one of Claims 6 to 8, wherein the master node (1) and/or the slave node (2) is adapted to recognize failure of a communication link between the master node (1) and the slave node (2) and to send a piece of degradation information to the data processing unit (4) in the event of failure being recognized.

10. System (10) according to one of Claims 6 to 9, wherein the data processing unit (4) is adapted to send a piece of status information, embodied as degradation information, to the master node (1) in the event of a communication link between the slave node (2) and the data processing unit (4) failing, and the master node (1) is adapted to forward slave data (12) received from the slave node (2) to the data processing unit (4) in the event of degradation being recognized.

11. System (10) according to one of Claims 6 to 10, wherein the data processing unit (4) is adapted to send a piece of status information, embodied as degradation information, to the slave node (2) in the event of a communication link between the master node (1) and the data processing unit (4) failing, and the slave node (2) is adapted to forward slave data (12) received from the master node (1) to the data processing unit (4) in the event of degradation being recognized.

12. System (10, 10a) comprising means (1, 2, 3, 3a, 3b, 4, 5) that are adapted to perform a method according to one of Claims 1-5.

13. Method for reducing the data traffic in a network (100) that comprises a master node (1), a slave node (2) and a data processing unit (4); wherein the master node (1), the slave node (2) and the data processing unit (4) are connected to a ring topology, the method comprising the method steps of:
- sending of master data (11) ascertained by the master node (1) to the data processing unit (4) and to the slave node (2) in respectively different ring directions;
- sending of slave data (12) ascertained by the slave node (2) to the data processing unit (4) and to the master node (1) in respectively different ring directions;
- checking of the master data (11) by the slave node (2), wherein if the check on the master data (11) indicates normal operation, the slave node sends only the master data (11) or only the slave data (12) to the data processing unit (4), and wherein the slave node (2) sends both the master data (11) and the slave data (12) to the data processing unit (4) in the event of an error being recognized.

14. Method according to Claim 13, wherein the master node (1) checks the slave data (12) and sends only the slave data (12) or only the master data (11) to the data processing unit (4) during normal operation, but sends both the master data (12) and the slave data (11) to the data processing unit (4) in the event of an error being recognized.

## Revendications

1. Procédé de réduction du trafic de données dans un réseau (100, 100a), comprenant les étapes suivantes :
- envoi de données maîtres (11) d'un noeud maître (1) à au moins une instance de contrôle (3, 3a) ;
- contrôle des données maîtres (11) par l'instance de contrôle (3, 3a) ;
- s'il n'y a pas d'erreur, envoi des données maîtres (11) ou des données esclaves (12) déterminées par le noeud esclave (2) de l'instance de contrôle (3, 3a) vers l'unité de traitement de données (4) ;
- si une erreur est reconnue, envoi de toutes les données maîtres (11) et données esclaves (12) disponibles au niveau de l'instance de contrôle (3) de l'instance de contrôle (3, 3a) à l'unité de traitement de données (4), le noeud esclave (2) comprenant ou étant l'instance de contrôle (3) et le noeud maître (1), l'instance de contrôle (3, 3a) et l'unité de traitement de données (4) étant raccordés à une topologie en anneau et étant préférentiellement agencés dans la topologie en anneau.

2. Procédé selon l'une des revendications précédentes, le noeud esclave (2) exécutant, pour le contrôle des données maîtres (11), les mêmes opérations que le noeud maître (1) et générant ainsi des données esclaves (12) redondantes avec les données maîtres (11).

3. Procédé selon l'une des revendications précédentes, le noeud esclave (2) n'exécutant les mêmes opérations que le noeud maître (1) que si l'instance de contrôle (3, 3a) a reconnu une erreur.

4. Procédé selon l'une des revendications précédentes, un coupleur de réseau (5) distinct du noeud esclave (2) comprenant ou étant l'instance de contrôle (3a).

5. Procédé selon l'une des revendications précédentes, le noeud maître (1) comprenant une autre instance de contrôle (3b) .

6. Système (10) comprenant un noeud maître (1), un noeud esclave (2) et une unité de traitement de données (4), qui sont raccordés à une topologie en anneau,
le noeud maître (1) étant adapté pour envoyer à l'unité de traitement de données (4) et au noeud esclave (2), dans des directions annulaires respectivement différentes, des données maîtres (11) qu'il a déterminées ;
le noeud esclave (2) étant adapté pour envoyer à l'unité de traitement de données (4) et au noeud maître (1), dans des directions annulaires respectivement différentes, des données esclaves (12) qu'il a déterminées ;
le noeud esclave (2) étant adapté pour contrôler les données maîtres (11), n'envoyer à l'unité de traitement de données (4), en fonctionnement normal, que les données maîtres (11) ou les données esclaves (12) mais, si une erreur a été reconnue, envoyer à l'unité de traitement de données (4) non seulement les données maîtres (11), mais aussi les données esclaves (12).

7. Système (10) selon la revendication 6, le noeud maître (1) étant adapté pour contrôler les données esclaves (12), n'envoyer à l'unité de traitement de données (4), en fonctionnement normal, que les données esclaves (12) ou les données maîtres (11) mais, si une erreur a été reconnue, envoyer à l'unité de traitement de données (4) non seulement les données maîtres (11), mais aussi les données esclaves (12).

8. Système (10) selon la revendication 6 ou 7, l'unité de traitement de données (4) étant adaptée pour prendre une contre-mesure en cas de défaillance du noeud maître (1) ou du noeud esclave (2).

9. Système (10) selon l'une des revendications 6 à 8, le noeud maître (1) et/ou le noeud esclave (2) étant adaptés pour reconnaître une défaillance d'une liaison de communication entre le noeud maître (1) et le noeud esclave (2) et pour, si une défaillance est reconnue, envoyer une information de dégradation à l'unité de traitement de données (4).

10. Système (10) selon l'une des revendications 6 à 9, l'unité de traitement de données (4) étant adaptée pour envoyer au noeud maître (1) une information de statut conçue en tant qu'information de dégradation en cas de défaillance d'une liaison de communication entre le noeud esclave (2) et l'unité de traitement de données (4) et le noeud maître (1) étant adapté pour retransmettre à l'unité de traitement de données (4), si une dégradation est reconnue, des données esclaves (12) reçues du noeud esclave (2).

11. Système (10) selon l'une des revendications 6 à 10, l'unité de traitement de données (4) étant adaptée pour envoyer au noeud esclave (2) une information de statut conçue en tant qu'information de dégradation en cas de défaillance d'une liaison de communication entre le noeud maître (1) et l'unité de traitement de données (4) et le noeud esclave (2) étant adapté pour retransmettre à l'unité de traitement de données (4), si une dégradation est reconnue, des données esclaves (12) reçues du noeud maître (1).

12. Système (10, 10a) comprenant des moyens (1, 2, 3, 3a, 3b, 4, 5) adaptés pour exécuter un procédé selon l'une des revendications 1-5.

13. Procédé de réduction du trafic de données dans un réseau (100) comprenant un noeud maître (1), un noeud esclave (2) et une unité de traitement de donnés (4), le noeud maître (1), le noeud esclave (2) et l'unité de traitement de données (4) étant raccordés à une topologie en anneau, le procédé comprenant les étapes suivantes :
- envoi de données maîtres (11) déterminées par le noeud maître (1) à l'unité de traitement de données (4) et au noeud esclave (2) dans des directions annulaires respectivement différentes ;
- envoi de données esclaves (12) déterminées par le noeud esclave (2) à l'unité de traitement de données (4) et au noeud maître (1) dans des directions annulaires respectivement différentes ;
- contrôle des données maîtres (11) par le noeud esclave (2), le noeud esclave, si le contrôle des données maîtres (11) indique un fonctionnement normal, n'envoyant à l'unité de traitement de données (4) que les données maîtres (1) ou les données esclaves (12) et le noeud esclave (2), si une erreur est reconnue, envoyant à l'unité de traitement de données (4) non seulement les données maîtres (11), mais aussi les données esclaves (12).

14. Procédé selon la revendication 13, le noeud maître (1) contrôlant les données esclaves (12) et n'envoyant à l'unité de traitement de données (4), en fonctionnement normal, que les données esclaves (12) ou les données maîtres (11), mais envoyant à l'unité de traitement de données (4), si une erreur est reconnue, non seulement les données maîtres (12), mais aussi les données esclaves (11) .
